# EUROPEAN PATENT APPLICATION

(11) **EP 2 471 424 A1**
(43) Date of publication of application: **04.07.2012**
(21) Application number: 10818506.7
(22) Date of filing: 09.02.2010
(51) Int. Cl.: A47J 43/046

(54) **ROTARY FOOD PROCESSING DEVICE**

(30) Priority: 28.09.2009 JP 2009222230
(71) Applicant: Panasonic Corporation, Kadoma-shi Osaka 571-8501 (JP)
(72) Inventor: TORIGAI, Terumi, Osaka-shi, Osaka 540-6207 (JP)
(74) Representative: Schwabe - Sandmair - Marx
(86) International application number: PCT/JP2010/000764
(87) International publication number: WO 2011/036824

(57) **Abstract**

A rotary cooking device of the invention is configured such that, for enhanced safety, when a cutter holder (10) is attached to a device main body (1), an output shaft of a motor (2) is coupled to a rotating shaft of a cutter (15) in the cutter holder. The rotary cooking device includes a longitudinally movable member (23) disposed in the cutter holder, and a stopper (12) having at least a portion movable between an advanced position located in a movement path of the longitudinally movable member and a receded position outside the movement path. In a state where the cutter holder mounted on the device main body does not have the container attached thereto, the longitudinally movable member is at an upper position to prevent rotation of the motor, and the stopper is at the advanced position to stop the longitudinally movable member from moving to a lower position.

## Description

### TECHNICAL FIELD

The present invention relates to rotary cooking device in which a cutter holder and a container for containing substances to be cooked are separable, such as mixer (also referred to as "blender") or mill.

### BACKGROUND ART

For example, a device as described below is hitherto available as a rotary cooking device of this kind (see JP-A-2004-254798).

Currently available rotary cooking devices typically include a device main body, a cutter holder that is detachably attached to the device main body and rotatably supports a cutter, and a container that is detachably attached to the cutter holder so that the cutter is located therein so as to define a space for containing substances to be cooked.

The device main body includes therein a motor for rotatingly driving the cutter and a safety switch for switching drive states of the motor. When the cutter holder is attached to the device main body, the output shaft of the motor is coupled to the rotating shaft of the cutter, allowing the cutter to be rotated upon driving of the motor.

The cutter holder is provided with a longitudinally movable member that is movable longitudinally in response to or in conjunction with the attaching and detaching operation of the container. In a state where the cutter holder does not have the container attached thereto, the longitudinally movable member takes an upper position by being urged by an elastic member such as a spring. Meanwhile, in a state where the cutter holder has the container attached thereto, the longitudinally movable member is moved down against the biasing force of the elastic member to take a lower position.

Upon attachment of the cutter holder with the container attached thereto to the device main body, the safety switch is turned on by the longitudinally movable member being at the lower position. This prompts the motor to be driven so that the cutter is rotated, and a cooking operation such as mixing can thus be performed.

When the container is detached in the above condition, the longitudinally movable member ascends to an upper position by the elastic force of the elastic member, causing the safety switch to be turned off. This prevents rotation of the cutter that has been exposed to the outside by detachment of the container, allowing for obviating of accidental rotation of the exposed cutter which might lead to, for example, an injury.
PATENT DOCUMENT 1: JP-A-2004-254798

### SUMMARY OF THE INVENTION

### SUBJECTS TO BE SOLVED BY THE INVENTION

However, with the configuration of the currently available rotary cooking device, the longitudinally movable member may be pressed down to a lower position due to an unintended operation such as tampering by a child or insufficient fitting at the time of unpacking, with the container being detached. In this case, the cutter exposed to the outside will be inadvertently rotated. Higher safety is therefore desired for the currently available rotary cooking device.

For obviating the foregoing circumstances, an object of the present invention is to provide a rotary cooking device with enhanced safety.

### MEANS FOR SOLVING THE PROBLEMS

In order to achieve the foregoing obj ect, the present invention is provided with the following arrangement.

According to a first aspect of the present invention, there is provided a rotary cooking device comprising:
a device main body including a motor;
a cutter holder rotatably supporting a cutter, the cutter holder being detachably attached to the device main body; and
a container detachably attached to the cutter holder so that the cutter is located therein, the container defining a space for containing a cooking ingredient, wherein
for attaching the cutter holder to the device main body, an output shaft of the motor is coupled to a rotating shaft of the cutter such that the cutter becomes rotatable,
the rotary cooking device further comprises:
   a longitudinally movable member disposed in the cutter holder; and
   a stopper having at least a portion, the portion being movable between an advanced position located in a movement path of the longitudinally movable member and a receded position outside the movement path of the longitudinally movable member, wherein
the rotary cooking device is adapted such that
in a state where the container is attached to the cutter holder, the cutter holder being attached to the device main body, the portion of the stopper is at the receded position and the longitudinally movable member is at a lower position for causing the motor to be drivable, and
in a state where the container is not attached to the cutter holder, the cutter holder being attached to the device main body, the longitudinally movable member is at an upper position to prevent the motor from being drivable and the portion of the stopper is at the advanced position to stop the longitudinally movable member from moving to the lower position.

According to a second aspect of the present invention, there is provided the rotary cooking device according to the first aspect, wherein
the stopper has an elastic portion, and the stopper is at the advanced position in a state of non-deformation of the elastic portion.

According to a third aspect of the present invention, there is provided the rotary cooking device according to the second aspect, wherein
the cutter holder is detachably attached to the device main body by an operation including turning motion, and
the longitudinally movable member is movable to the upper position in conjunction with the turning motion, and the elastic portion is elastically deformable in conjunction with the movement of the longitudinally movable member and the stopper is movable from the advanced position to the receded position.

According to a fourth aspect of the present invention, there is provided the rotary cooking device according to the third aspect, wherein
the cutter holder is detachable from the device main body by an operation including turning motion reverse to the turning motion, and
the longitudinally movable member is movable to the lower position in conjunction with the reverse turning motion, and the elastic portion is elastically restorable in conj unction to the movement of the longitudinally movable member and the stopper is movable from the receded position to the advanced position.

According to a fifth aspect of the present invention, there is provided the rotary cooking device according to the third or fourth aspect, wherein the cutter holder is detachably attached to the device main body through bayonet coupling.

According to a sixth aspect of the present invention, there is provided the rotary cooking device according to the first or second aspect, wherein
the cutter holder has threaded portions at spacings in a peripheral direction along a tubular sidewall of the cutter holder, the threaded portions each having a plurality of screw threads along a longitudinal direction to screwably receive the container,
the longitudinally movable member includes a lever projecting upward, the lever having screw threads along the longitudinal direction, the screw threads being placeable in continuity with the threaded portions of the cutter holder, and
for screwing the container to the cutter holder, the container comes into contact with the lever to lower the longitudinally movable member.

According to a second aspect of the present invention, there is provided the rotary cooking device according to the sixth aspect, wherein, in a state where the longitudinally movable member is at the upper position, ridges of the threaded portions of the cutter holder and ridges of the screw threads on the lever is at an equal height.

According to an eighth aspect of the present invention, there is provided the rotary cooking device according to the second aspect, wherein the stopper includes a flat spring partly having a bend.

According to a ninth aspect of the present invention, there is provided the rotary cooking device according to the second aspect, wherein
the device main body includes a receiver portion for allowing the longitudinally movable member to be received therein, and
the receiver portion and the stopper are an integrally molded member of a synthetic resin.

According to a 10th aspect of the present invention, there is provided the rotary cooking device according to the second aspect, wherein
the device main body includes a receiver portion for allowing the longitudinally movable member to be received therein, and
the stopper includes a pin movably passable through a sidewall of the receiver portion, the stopper being configured such that one end of the pin is located at the advanced position in a state of non-deformation of the elastic portion.

According to an 11th aspect of the present invention, there is provided the rotary cooking device according to the second aspect, wherein the stopper includes a rotatable lever having a mid portion as a rotation center thereof, the stopper being configured such that a first end of the lever is located at the advanced position in a state of non-deformation of the elastic portion, and that a second end of the lever is located at the advanced position in a state of elastic deformation of the elastic portion.

According to a 12th aspect of the present invention, there is provided the rotary cooking device according to the first or second aspect, including:
an operating portion for allowing input of information at least indicating drive start or drive stop of the motor; and
a cutter holder attachment/detachment preventing portion for permitting attachment and detachment of the cutter holder in response to input of information indicating drive stop of the motor through the operating portion, and for preventing attachment and detachment of the cutter holder in response to input of information indicating drive start of the motor through the operating portion.

According to a 13th aspect of the present invention, there is provided the rotary cooking device according to the 12th aspect, wherein
the operating portion is a rotary switch, and
the cutter holder attachment/detachment preventing portion is movable between an attachment/detachment permitting position for permitting attachment and detachment of the cutter holder and an attachment/detachment preventing position to prevent attachment and detachment of the cutter holder, mechanically in conjunction with rotating motion of the rotary switch.

According to a 14th aspect of the present invention, there is provided the rotary cooking device according to the 13th aspect, wherein
the cutter holder is detachably attached to the device main body by an operation including turning motion, and
the cutter holder attachment/detachment preventing portion is movable between the attachment/detachment preventing position to prevent the turning motion of the cutter holder and the attachment/detachment permitting position for permitting the turning motion of the cutter holder, the cutter holder attachment/detachment preventing portion being located at the attachment/detachment preventing position by moving into a movement path of the cutter holder and at the attachment/detachment permitting position by moving out of the movement path of the cutter holder, mechanically in conjunction with rotating motion of the rotary switch.

According to a 15th aspect of the present invention, there is provided the rotary cooking device according to the 14th aspect, wherein
the cutter holder attachment/detachment preventing portion includes:
a substantially circular cam fixed around a rotating shaft of the rotary switch, the cam having a recess at a portion of an outer periphery thereof;
a first rod disposed to come into contact with the outer periphery of the cam, the first rod being movable in a first axial direction by rotation of the cam to be caused by rotating motion of the rotary switch; and
a second rod disposed to come into contact with the first rod, the second rod being movable between the attachment/detachment preventing position and the attachment/detachment permitting position by movement in a second axial direction in conjunction with the movement of the first rod in the first axial direction.

### EFFECTS OF THE INVENTION

With a rotary cooking device of the present invention, in a state where the cutter holder attached to the device main body does not have the container attached thereto, i.e. , where the cutter is exposed to the outside, the longitudinally movable member takes an upper position for keeping the motor from being driven, and a portion of a stopper takes an advanced position to hinder the movement of the longitudinally movable member to a lower position. Thus, even if the longitudinally movable member is pressed down by an inadvertent operation, the portion of the stopper hinders the movement of the longitudinally movable member to the lower position. This allows for prevention of accidental rotation of the cutter exposed to the outside. In this manner, higher safety is ensured.

### BRIEF DESCRIPTION OF THE DRAWINGS

The above and other objects and features of the present invention will become apparent from the following description of preferred embodiments in connection with the accompanying drawings, wherein
Fig. 1 is a conceptual diagram of the overall configuration of a rotary cooking device according to a first embodiment of the present invention;
Fig. 2 is a partially enlarged view of the rotary cooking device of Fig. 1;
Fig. 3 is a perspective view of a cutter holder of the rotary cooking device of Fig. 1 as seen from above;
Fig. 4 is a perspective view of the cutter holder of the rotary cooking device of Fig. 1 as seen from below;
Fig. 5 is a perspective view of an upper portion of a device main body of the rotary cooking device of Fig. 1 as seen from above;
Fig. 6 is a cross-sectional view depicting a state of a stopper being fitted in the rotary cooking device of Fig. 1;
Fig. 7A is an exploded view depicting a positional relationship among a longitudinally movable member, a longitudinally movable pin, and the stopper, after the cutter holder with a container screwed thereto is mounted on the device main body;
Fig. 7B is a longitudinal cross-sectional view of a portion in the vicinity of A1. in Fig. 7A;
Fig. 7C is a lateral cross-sectional view of a portion in the vicinity of A1 in Fig. 7A;
Fig. 8A is a fragmentary side view schematically depicting a state of members during operation of mounting the cutter holder with the container screwed thereto to the device main body;
Fig. 8B is a cross-sectional view taken along line B1-B1 in Fig. 8A;
Fig. 9A is a fragmentary side view schematically depicting a state of the members after the cutter holder with the container screwed thereto is mounted on the device main body;
Fig. 9B is a cross-sectional view taken along line B2-B2 in Fig. 9A;
Fig. 10A is a fragmentary side view schematically depicting a state of the members when the container is detached from the cutter holder mounted on the device main body;
Fig. 10B is a cross-sectional view taken along line B3-B3 in Fig. 10A;
Fig. 11A is a side view schematically depicting a positional relationship among the longitudinally movable member, the longitudinally movable pin, and the stopper, before and after detachment of the container from the cutter holder mounted on the device main body;
Fig. 11B is a lateral cross-sectional view of a portion in the vicinity of A2 in Fig. 11A;
Fig. 12A is an explanatory view depicting a state where the ridges of screw threads provided on a lever of the longitudinally movable member are located midway between adj acent screw threads on a threaded portion of the cutter holder;
Fig. 12B is an explanatory view depicting a state where a lower end of the lever of the longitudinal movable member comes into contact with the stopper when the container is screwed to the cutter holder that is in the state depicted in Fig. 12A;
Fig. 12C is an explanatory view depicting a state where the stopper breaks down by being pressed by the lower end of the lever of the longitudinally movable member;
Fig. 13A is an explanatory view depicting a state where the ridges of the screw threads provided on the lever of the longitudinally movable member are located on the ridges of the screw threads on the threaded portion of the cutter holder;
Fig. 13B is an explanatory view depicting a state where the lower end of the lever of the longitudinally movable member comes into contact with the stopper when the container is screwed to the cutter holder that is in the state depicted in Fig. 13A;
Fig. 14A is an explanatory view depicting a state where the ridges of the screw threads provided on the lever of the longitudinally movable member are located on the ridges of the screw threads on the threaded portion of the cutter holder;
Fig. 14B is an explanatory view depicting a state where the lower end of the lever of the longitudinally movable member comes into contact with the stopper when the container is screwed to the cutter holder that is in the state depicted in Fig. 14A;
Fig. 15 is a lateral cross-sectional view depicting a first modification of the stopper;
Fig. 16 is a lateral cross-sectional view depicting a second modification of the stopper;
Fig. 17 is a lateral cross-sectional view depicting a third modification of the stopper;
Fig. 18A is a conceptual diagram of the overall configuration of a rotary cooking device according to a second embodiment of the present invention in a state where a rotary switch is "ON";
Fig. 18B is a plan view depicting a positional relationship between a cam and a first rod in the rotary cooking device of Fig. 18A;
Fig. 19A is a conceptual diagram of the overall configuration of the rotary cooking device according to the second embodiment of the present invention in a state where the rotary switch is "OFF"; and
Fig. 19B is a plan view depicting a positional relationship between the cam and the first rod in the rotary cooking device of Fig. 19A.

### MODES FOR CARRYING OUT THE INVENTION

Before continuing the description of the present invention, it is noted that, in the accompanying drawings, like parts are given like reference numerals.

Embodiments of the present invention are described below with reference to the drawings.

### «First Embodiment»

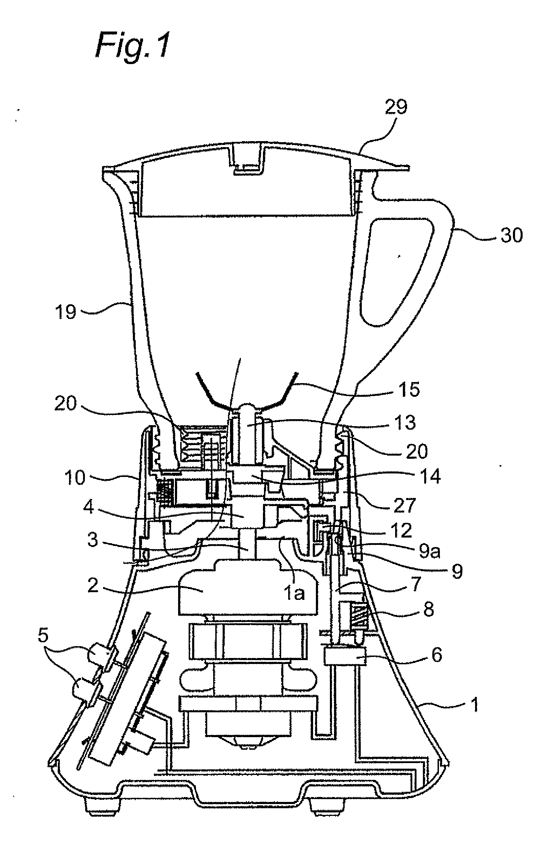

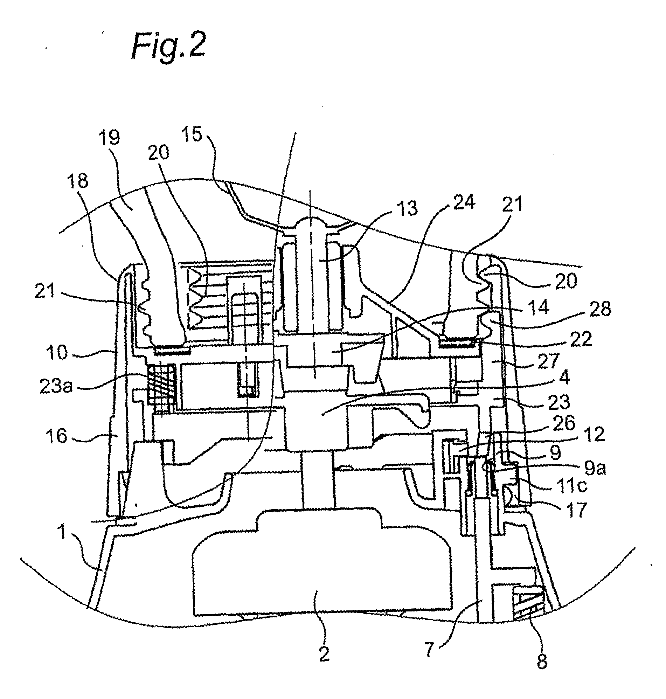

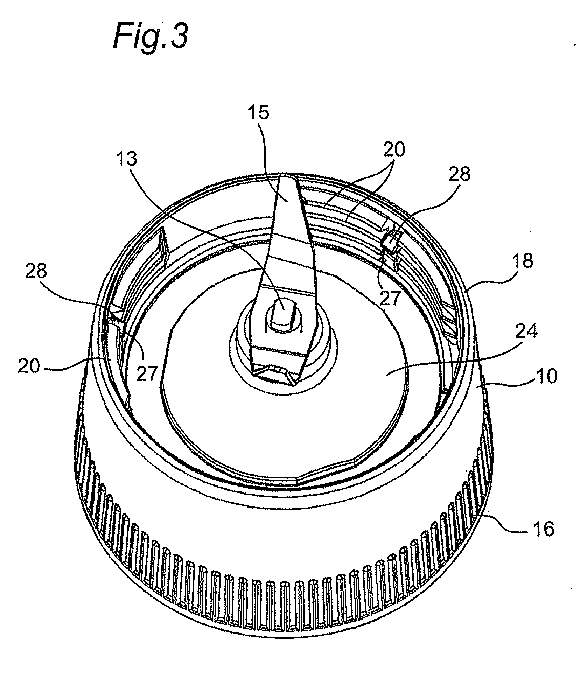

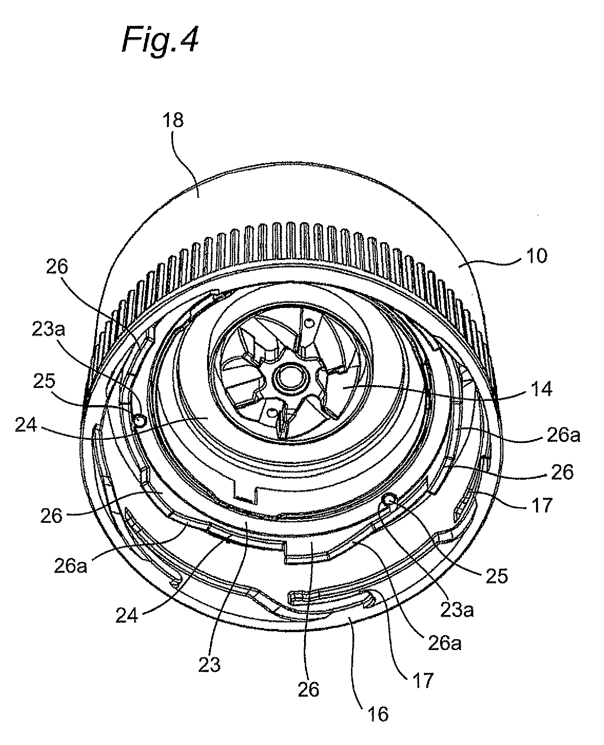

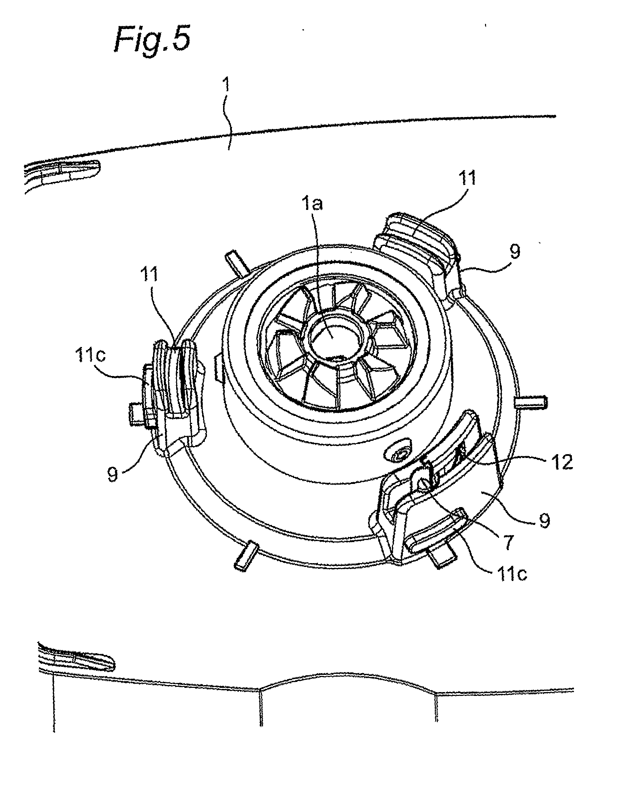

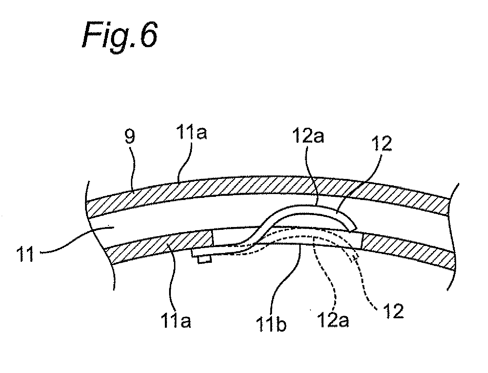

The overall structure of a rotary cooking device according to a first embodiment of the present invention is described with reference to Figs. 1 to 6. Fig. 1 is a conceptual diagramof the overall configuration of the rotary cooking device according to the first embodiment of the present invention, and Fig. 2 is a partially enlarged view thereof. Fig. 3 is a perspective view of a cutter holder of the rotary cooking device of Fig. 1 as seen from above. Fig. 4 is a perspective view of the cutter holder of the rotary cooking device of Fig. 1 as seen from below. Fig. 5 is a perspective view of an upper portion of a device main body of the rotary cooking device of Fig. 1 as seen from above. Fig. 6 is a cross-sectional view depicting a state of a stopper being fitted in the rotary cooking device of Fig. 1. Description is given here of an exemplary case in which the rotary cooking device is a blender.

The rotary cooking device according to the first embodiment includes a device main body 1, a cutter holder 10 that is detachably attached to the device main body 1 and rotatably supports a cutter 15, and a container 19 that is detachably attached to the cutter holder 10 so that the cutter 15 is located therein so as to define a space for containing substances to be cooked.

A motor 2 and a safety switch 6 are built in the device main body 1. The motor 2 is adapted to rotatably drive the cutter 15 for crushing substances to be cooked, and the safety switch 6 is adapted to switch drive states (a drivable state and a non-drivable state) of the motor 2. The output shaft 3 of the motor 2 projects upward through a through hole 1a that is provided in an upper wall of the casing of the device main body 1, and a connector 4 on the driving side is fixed to the projecting portion. The safety switch 6 is a normally-open type switch that is connected to power source circuitry of the motor 2. The safety switch 6 is turned on by being pressed down with a longitudinally movable pin 7. The longitudinally movable pin 7 is a reactive member in the form of a lever that is held in the device main body 1.

The longitudinally movable pin 7 is urged upward, i.e., in the direction away from the safety switch 6, by a spring 8, which is an exemplary elastic member. Thus, the safety switch 6 is normally "OFF".

On a front side of the device main body 1 is disposed an operating portion 5 for accepting input of instructions of the user such as drive start and drive stopper of the motor 2 or change of rotation speed of the cutter 15. As depicted in Fig. 5, three receiver portions 9 are provided on an upper portion of the device main body 1 for receiving (fittingly supporting) the cutter holder 10. The three receiver portions 9 are arranged at equidistances (at intervals of about 120 degrees) along the circumference about the center of the through hole 1a provided to allow the output shaft 3 of the motor 2 to pass therethrough. Three receiver portions 9 are disposed because this arrangement provides for the most stable support for the cutter holder 10 (so-called three-point mounting.)

Grooves 11 having a U-shape in cross section are provided in the receiver portions 9, respectively. One of the three receiver portions 9 has a through hole 9a provided therethrough. The longitudinally movable pin 7 is movable longitudinally through the through hole 9a.

Further, one of the three receiver portions 9 has a stopper 12 provided thereto. The stopper 12 is disposed so as to move between an advanced position at the inner side of the groove 11 and a receded position at the outer side of the groove 11. More specifically, as depicted in Fig. 6, the stopper 12 is a flat spring having a first end and a second end, where the first end is fixed to an external surface of a sidewall 11a on the inner side of the groove 11, and the second end is a free end. The stopper 12 has a curved portion 12a that curves, in non-deformation, to take a position within the groove 11 past a through hole 11b that is provided in the sidewall 11a at the inner side of the groove 11. It is noted here that the position of the stopper 12 indicated by the solid line in Fig. 6 is referred to as the advanced position. The stopper 12 is adapted to be elastically deformed to the receded position outside the groove 11 as indicated by the dotted line in Fig. 6 by the curved portion 12a being pressed out of the groove 11.

As depicted in Fig. 5, on external surfaces of the sidewalls 11a at the outer side of the receiver portions 9 are provided projections 11c to function as a first mate of a bayonet mechanism.

The cutter holder 10 includes a partition wall 24 and a cylindrical portion. The partition wall 24 serves as a holder portion for rotatably holding a rotating shaft (driven shaft) 13 of the cutter 15, and the cylindrical portion is disposed around the partition wall 24. Herein, as depicted in Fig. 3, the cylindrical portion that occupies a lower area as from the partition wall 24 is referred to as a lower cylindrical portion 16, and the cylindrical portion that occupies an upper area as from the partition wall 24 is referred to as an upper cylindrical portion 18.

A driven side connector 14 that is couplable to the driving side connector 4 is fixed at the lower end of the rotating shaft 13 of the cutter 15. When the cutter holder 10 is mounted onto the device main body 1, the rotating shaft 13 of the cutter 15 is coupled to the output shaft 3 of the motor 2 by means of the driving side connector 4 and the driven side connector 14, such that the cutter 15 becomes rotatable upon driving of the motor 2.

As depicted in Fig. 4, six substantially L-shaped guide grooves 17 are arranged along the inner peripheral surface of the lower cylindrical portion 16 of the cutter holder 10 at equidistances (at intervals of about 60 degrees) so as to function as a second mate of the bayonet mechanism. The cutter holder 10 is attached to the device main body 1 by inserting the projections 11c into three of the guide grooves 17, turning the cutter holder 10 in the circumferential direction by a specific angle, followed by causing the projections 11c to move along the guide grooves 17, which is called bayonet coupling. The guide grooves 17 are provided by twice the number of the projections 11c, i.e., six, in order to eliminate otherwise movable directions in fitting the cutter holder 10 as much as possible to facilitate the mounting operation. It is also in order to allow a grip 30 on the container 19 to be set at a position convenient for users from among positions on, for example, the right, left, and front, as the position of the grip 30 gradually changes as a packing 22 deteriorates.

Threaded portions 20 for removably receiving the substantially cylindrical container 19 are arranged at spacings on the inner peripheral surface of the upper cylindrical portion 18 of the cutter holder 10. Associated threaded portions 21 for the threaded portions 20 are also arranged on the lower outer peripheral surface of the container 19. As depicted in Fig. 2, with the packing 22 disposed between the cutter holder 10 and the container 19, the threaded portions 20 and the threaded portions 21 are screwed to one another, so as to maintain a fluid-tight condition at the coupling portion of the cutter holder 10 with the container 19, and to locate the cutter 15 inside the container 19.

As depicted in Fig. 4, a substantially cylindrical longitudinally movable member (also referred to as a safety reactive member) 23 is provided in a longitudinally movable manner in an inner peripheral portion of the lower cylindrical portion 16 of the cutter holder 10. The longitudinally movable member 23 is disposed in such a direction as to face the upper end of the longitudinally movable pin 7. Further, as depicted in Fig. 4, three downwardly-projecting guide pins 25 are arranged at equidistances (at intervals of about 120 degrees) on the partition wall 24 of the cutter holder 10. These guide pins 25 are passed through through holes 23a that are provided in the longitudinally movable member 23 to penetrate therethrough in a longitudinal direction. These three guide pins 25 guide the longitudinally movable member 23 for longitudinal movement and keep the longitudinally movable member 23 from being moved in the circumferential direction.

As depicted in Figs. 1 and 2, the longitudinally movable member 23 is urged downward by a spring 23a, which is an exemplary elastic member, that is interposed between the longitudinally movable member 23 and the partition wall 24. In other words, in fitting the cutter holder 10 to the container 19, the longitudinally movable member 23 is urged by the spring 23a such that the cutter holder 10 takes a constant position relative to the cutter 15 in whichever directions the cutter holder 10 is tilted. The elastic force of the spring 23a is set less than the elastic force of the spring 8.

Cam portions 26 are arranged at equidistances in six positions on the lower end of the longitudinally movable member 23. The cam portions 26 are fittable in the grooves 11 in the receiver portions 9. The earlier described stopper 12 is configured to move between the advanced and receded positions in an intersectional direction, i.e., a lateral direction, relative to the direction of movement of the longitudinally movable member 23, i.e., the longitudinal direction. As depicted in Fig. 4, the cam portions 26 each have a trapezoidal shape with one slant surface 26a. The cam portions 26 are provided by twice the number of the receiver portions 9, i.e., six, in order to eliminate otherwise movable directions in fitting the cutter holder 10 as much as possible to facilitate the mounting operation. It is also in order to allow the grip 30 on the container 19 to be set at a position convenient for users from among positions on, for example, the right, left, and front, as the position of the grip 30 gradually changes as the packing 22 deteriorates.

The longitudinally movable member 23 has, at an upper portion thereof, levers 27 that project upward from the cylindrical main body. As depicted in Fig. 3, the levers 27 pass through the partition wall 24 of the cutter holder 10 so as to move in cutout portions in the threaded portions 20 of the upper cylindrical portion 18. The levers 27 have screw threads 28 thereon that are placeable in continuity with the screw threads on the threaded portions 20. When the container 19 is screwed to the cutter holder 10, as depicted in Figs. 1 and 2, the threaded portions 21 of the container 19 come into contact with the upper ends of the levers 27, so as to lock the longitudinally movable member 23 in a held-down condition.

The container 19 is a substantially cylindrical member made of, for example, glass and is configured to removably receive a lid 29 at an upper open portion thereof. The grip 30 is fitted on a portion of the outer peripheral surface of the container 19. It is noted that the container 19 is not limited to this structure, and may be, for example, a covered tubular member. In this case, a cooking ingredient may be put in and taken out from the lower open portion of the container by turning the container that has been detached from the cutter holder 10 upside down. Further, the container may be fitted to the cutter holder 10 by inverting the container and the cutter holder.

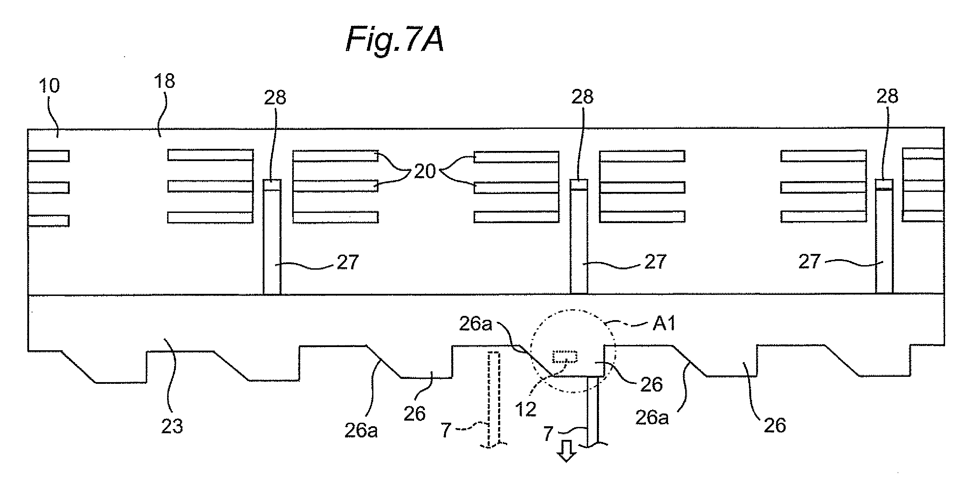

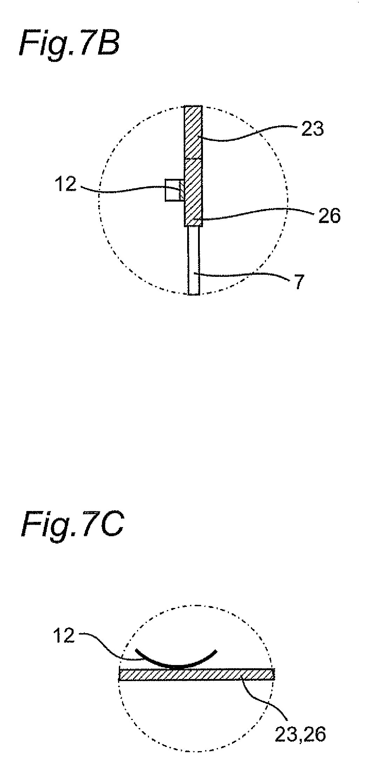

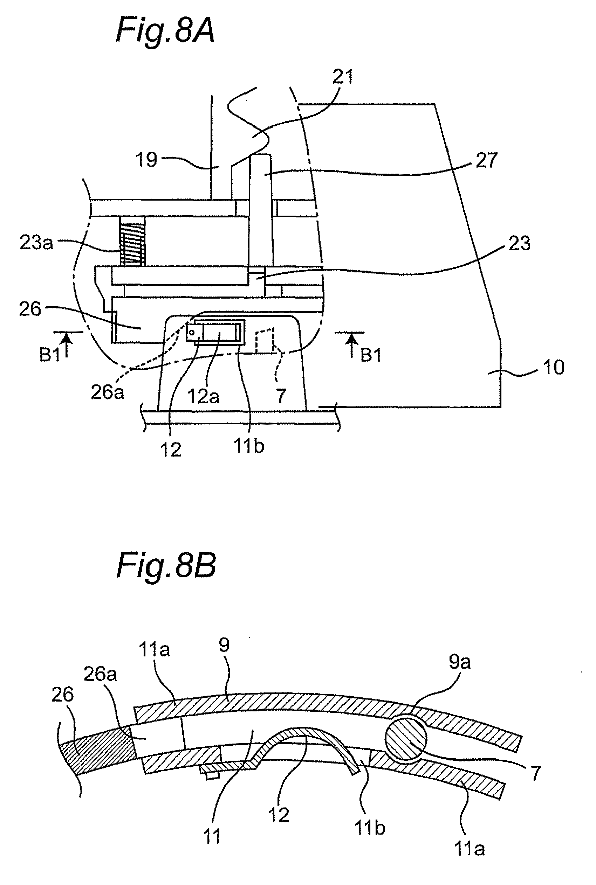

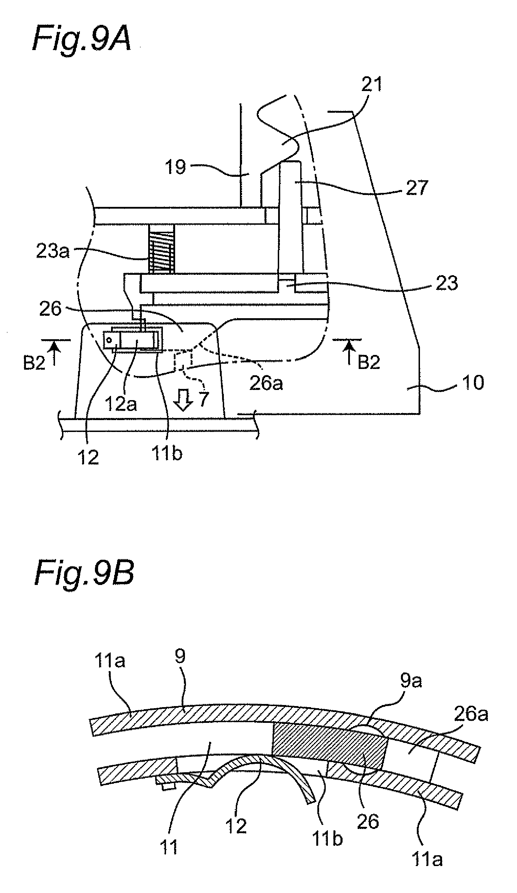

Description is given next of the operation for mounting the cutter holder 10 with the container 19 screwed thereto onto the device main body 1 with reference to Figs. 1, 2, 4, 5, and 7A to 9B. Fig. 7A is an exploded view depicting a positional relationship among the longitudinally movable member 23, the longitudinally movable pin 7, and the stopper 12, after the cutter holder 10 with the container 19 screwed thereto is mounted on the device main body 1. Fig. 7B is a longitudinal cross-sectional view of a portion in the vicinity of A1 in Fig. 7A. Fig. 7C is a lateral cross-sectional view of a portion in the vicinity of A1 in Fig. 7A. Fig. 8A is a fragmentary side view schematically depicting the state of the members during operation of mounting the cutter holder 10 with the container 19 screwed thereto onto the device main body 1. Fig. 8B is a cross-sectional view taken along line B1-B1 in Fig. 8A. Fig. 9A is a fragmentary side view schematically depicting the state of the members after the cutter holder 10 with the container 19 screwed thereto is mounted on the device main body 1. Fig. 9B is a cross-sectional view taken along line B2-B2 in Fig. 9A.

First, the lower cylindrical portion 16 of the cutter holder 10 with the container 19 screwed thereto (see Fig. 4) is fitted over the outer external surfaces of the sidewalls 11a of the three receiver portions 9 (see Fig. 5). Thus, the projections 11c on any of the receiver portions 9 are positioned in three of the six guide grooves 17. At this time, as indicated by the dotted line in Fig. 7A, the longitudinally movable pin 7 is located in between adjacent cam portions 26, being lifted by the elastic force of the spring 8. Fig. 8A depicts the positional relationship among the members in this state. At this time, as depicted in Fig. 8B, the stopper 12 is at the advanced position.

Next, the cutter holder 10 is turned by a specific angle in the circumferential direction (leftward in Fig. 7A and rightward in Fig. 8A) such that the projections 11c are moved along the guide grooves 17. This turning motion of the cutter holder 10 in the circumferential direction causes the longitudinally movable pin 7 to move along the slant surface 26a of a cam portion 26 of the longitudinally movable member 23. At this time, the threaded portions 21 of the container 19 come into contact with the upper ends of the levers 27 of the cutter holder 10; thus, as depicted in Figs. 7A and 9A, the longitudinally movable pin 7 is pressed down against the elastic force of the spring 8 (see Fig. 1 or 2). In this manner, as indicated by the solid line in Fig. 7A, the lower end of the longitudinally movable pin 7 that has been moved down comes into contact with the safety switch 6, causing the safety switch 6 to be switched from an "OFF" state to an "ON" state. Thus, the motor 2 becomes drivable. The position of the longitudinally movable member 23 in this state is referred to as a lower position. When a user instruction to start a cooking operation is inputted through the operating portion 5 in this state, the motor 2 is driven to bring the cutter 15 into rotation, such that a cooking ingredient contained in the container 19 is subjected to crush processing.

Further, as depicted in Figs. 7B, 7C, and 9B, by the turning motion of the cutter holder 10 in the circumferential direction, a slant surface 26a of a cam portion 26 of the longitudinally movable member 23 presses the stopper 12 into elastic deformation, causing the stopper 12 to move to the receded position.

The cutter holder 10 with the container 19 screwed thereto is detached from the device main body 1 through a turning motion in a direction opposite the direction as described above, the lid 29 is removed, and cooked substances are thus taken out, for example, to a cup. In the first embodiment, the separable structure of the cutter holder 10 and the container 19 facilitates cleaning of these members. Further, detaching the cutter holder 10 with the container 19 screwed thereto from the device main body 1 causes the longitudinally movable pin 7 to be lifted by the elastic force of the spring 8, such that the safety switch 6 is switched from the ON state to the OFF state. Thus, even if a user's instruction to stop the operation is not inputted through the operating portion 5, the motor 2 becomes non-drivable, and the cutter 15 stops rotation.

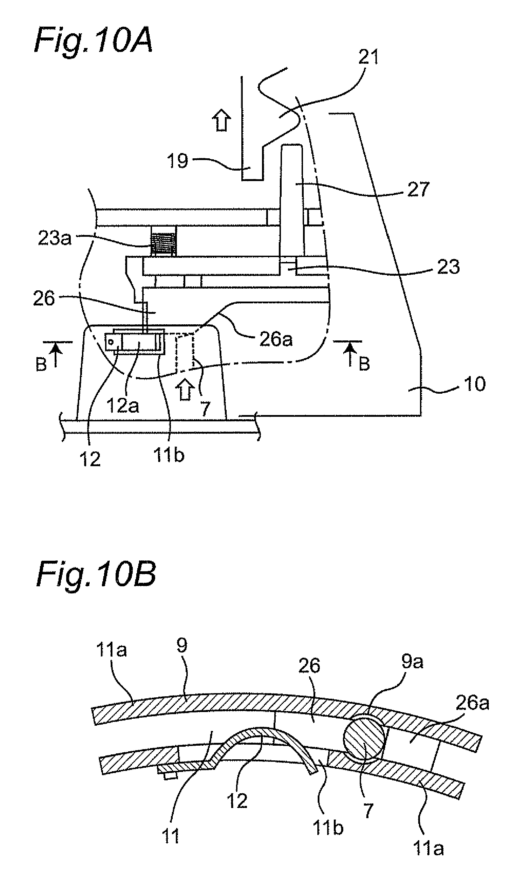

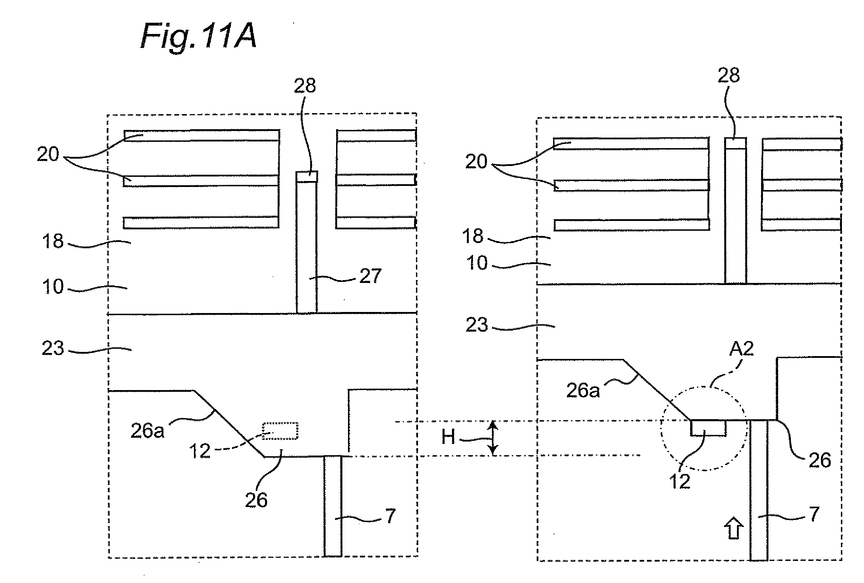

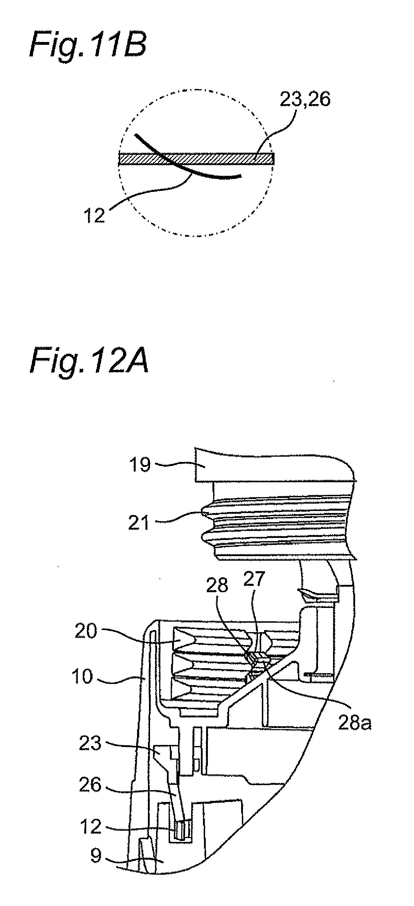

Description is given next of a safety function in detachment of the container 19 from the cutter holder 10 that is mounted on the device main body 1 with reference to Figs. 10A to 11B. Fig. 10A is a fragmentary side view schematically depicting the state of the members when the container 19 is detached from the cutter holder 10 mounted on the device main body 1. Fig. 10B is a cross-sectional view taken along line B3-B3 in Fig. 10A. Fig. 11A is a side view schematically depicting a positional relationship among the longitudinally movable member 23, the longitudinally movable pin 7, and the stopper 12, before and after the detachment of the container 19 from the cutter holder 10 mounted on the device main body 1. Fig. 11B is a lateral cross-sectional view of a portion in the vicinity of A2 in Fig. 11A.

When the container 19 is detached from the cutter holder 10 mounted on the device main body 1, the cutter 15 becomes exposed to the outside; this potentially poses a risk in case the cutter 15 could rotate in this state.

On the other hand, in the first embodiment, detaching the container 19 from the cutter holder 10 removes a member to lock the longitudinally movable member 23 in an immovable state in the upward direction. Thus, as depicted in Figs. 10A and 11A, the spring 8 that has stronger elastic force than the spring 23a (see Fig. 1 or 2) biases the longitudinally movable pin 7 and the longitudinally movable member 23 upward. The position of the longitudinally movable member 23 is referred to as an upper position herein. In this manner, the longitudinally movable pin 7 is lifted away from the safety switch 6, causing the safety switch 6 to be switched from the "ON" state to the "OFF" state. Hence, even if a user instruction to stop the operation is not inputted through the operating portion 5, the motor 2 becomes non-drivable, and the cutter 15 stops rotation.

As depicted in Fig. 11A, as a result of elevation of the longitudinally movable member 23, the cam portions 26 are displaced upward by a distance H. Thus, as depicted in Figs. 10B and 11B, the stopper 12 that has been at the receded position is moved to the advanced position to take a position below a cam portion 26, i.e., within the descending track of the cam portions 26.

Hence, even when the levers 27 are depressed by an accidental operation such as tampering by a child, the stopper 12 hinders descending (movement toward the lower position) of the longitudinally movable member 23, so that the safety switch 6 is protected from being inadvertently turned on. Hence, the rotary cooking device according to the first embodiment is protected from inadvertent rotation of the cutter 15 exposed to the outside, thus ensuring higher safety.

Description has been given above of the safety function in detachment of the container 19 from the cutter holder 10 mounted on the device main body 1. It is noted that a similar safety function is provided for merely attaching the cutter holder 10 to device main body 1. More specifically, in the case of merely attaching the cutter holder 10 to the device main body 1 also, since no member locks the longitudinally movable member 23 in an immovable state in the upward direction, the spring 8 biases the longitudinally movable pin 7 and the longitudinally movable member 23 upward. The stopper 12 is thus moved to the advanced position to hinder descending of the longitudinally movable member 23. Hence, the safety switch 6 is protected from being inadvertently turned on, and the cutter 15 that is exposed to the outside is also protected from being inadvertently rotated, which ensures higher safety.

Specifically, according to the first embodiment, even if the levers 27 are inadvertently pressed down in a state where the cutter 15 is exposed to the outside, the stopper 12 hinders descending of the longitudinally movable member 23 so as to prevent rotation of the cutter 15. This configuration ensures higher safety.

In the first embodiment, when merely the cutter holder 10 is attached to the device main body 1, the stopper 12 takes the advanced position to hinder descending of the longitudinally movable member 23, such that the longitudinally movable member 23 is locked at the upper position (see the right-hand figure in Fig. 11A) . Thus, the cutter holder 10 mounted on the device main body 1 does not permit the container 19 to be fitted thereto. The container 19 can be fitted to the cutter holder 10 after detachment of the cutter holder 10 from the device main body 1.

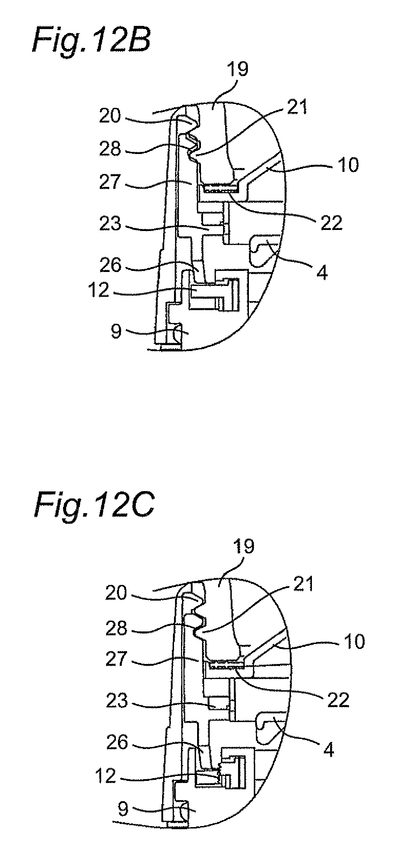

With the longitudinally movable member 23 lifted (see the right-hand figure in Fig. 11A), as depicted in Fig. 12A, assuming the ridges 28a of screw threads 28 on the levers 27 are located midway between adjacent screw threads on the threaded portions 20 of the cutter holder 10, in fitting the container 19 to the cutter holder 10, the threaded portions 21 of the container 19 will press down the longitudinally movable member 23 so as to bring the ridges 28a of the screw threads 28 on the levers 27 into continuity with the ridges 20a of the screw threads on the threaded portions 20 that are provided on the upper cylindrical portion 18 of the cutter holder 10. As a result, as depicted in Fig. 12B, excessive force is to be applied to the stopper 12 coming into contact with a cam portion 26 of the longitudinally movable member 23, which may lead to destruction of the stopper 12 as depicted in Fig. 12C.

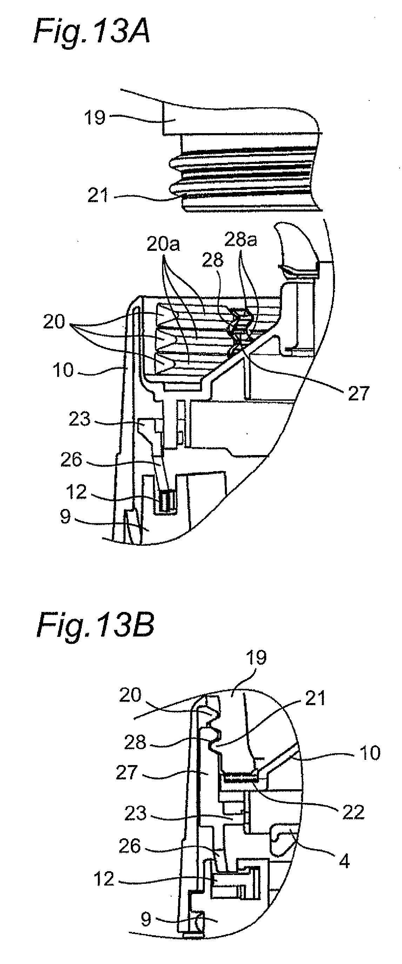

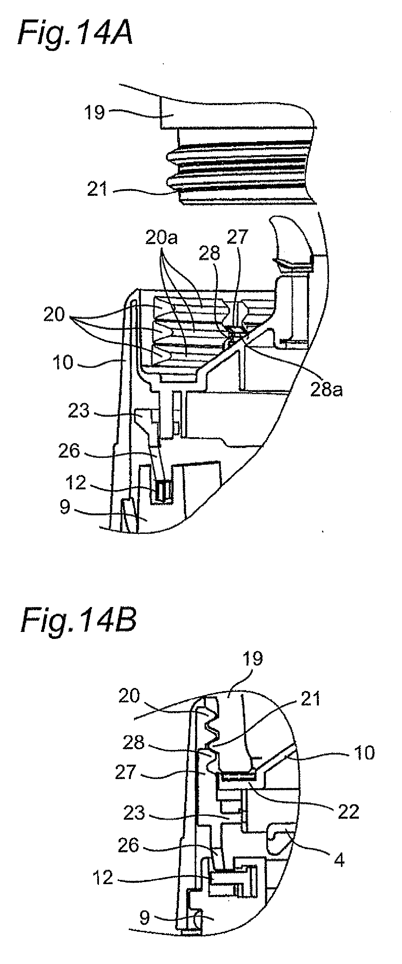

For this reason, as depicted in Figs. 13A and 13B, or 14A and 14B, the ridges 28a of the screw threads 28 on the levers 27 are preferably in continuity with the ridges (also referred to as uppermost positions) 20a of the screw threads on the threaded portions 20 of the cutter holder 10 when the longitudinally movable member 23 is in a lifted condition. This configuration provides for prevention of destruction of the stopper 12 in threadingly connecting the threaded portions 20 of the cutter holder 10 with the threaded portions 21 of the container 19.

The longitudinally movable member 23 is urged downward by the spring 23a in order to keep the screw threads 28 on the levers 27 from resting on midway between adjacent screw threads on the threaded portions 20 of the cutter holder 10 in a state where the device main body 1 does not have the cutter holder 10 attached thereto, namely, in a free state. This configuration allows, in fitting the container 19 to the cutter holder 10, the upper ends of the screw threads 28 on the lever 27 to come into contact with the threaded portions 21 of the container 19, ensuring the levers 27 to be pressed down by the threaded portions 21 of the container 19.

The present invention is not limited to the foregoing embodiment and may be implemented in various other modes. For example, in the foregoing description, for preventing rotation of the cutter 15 that is exposed to the outside, the safety switch 6 is turned on and off in conjunction with the longitudinal movement of the longitudinally movable member 23 to switch the drive states of the motor 2. The present invention is however not limited thereto. For example, the operating portion 5 of the device main body 1 may be configured to lock or unlock the operating portion 5 of the device main body 1 in conjunction with the longitudinal movement of the longitudinally movable member 23. The operating portion 5 is locked to keep the motor 2 from being driven, with the result that the cutter 15 exposed to the outside is prevented from being rotated.

In the foregoing description, the longitudinally movable pin 7 is provided to switch ON/OFF states of the safety switch 6 in conjunction with the longitudinal movement of the longitudinally movable member 23. The present invention is however not limited thereto. For example, another configuration is possible such that the longitudinally movable member 23 directly switches ON/OFF states of the safety switch 6.

Further, in the foregoing description, the stopper 12 is provided in the form of a flat spring partly including a bend as depicted in Fig. 6. The present invention is however not limited thereto.

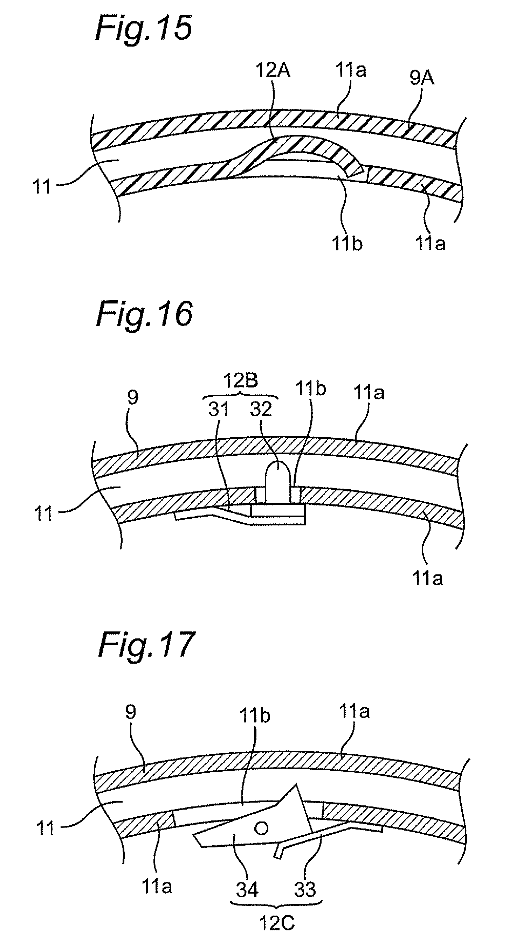

For example, as depicted in Fig. 15, a stopper 12A and a receiver portion 9Amay be integrally formed with a synthetic resin. In this manner, easy assembling is achieved.

Also, as depicted in Fig. 16, a stopper 12B may be constituted by a flat spring 31 and a pin 32, where the flat spring 31 is fixed on an external surface of a sidewall 11a of a groove 11 in a receiver portion 9, while the pin 32 passes through the sidewall11a so as to be movable ahead and away within the groove 11. In this case, the pin 32 is normally urged by the flat spring 31 such that a first end of the pin 32 is located within the groove 11, namely, takes the advanced position. With this configuration, a stiff material can be used for the pin 32, which provides for a secure stopper function, i.e., a safety function.

Moreover, as depicted in Fig. 17, a stopper 12C may be constituted by a flat spring 33 and a substantially L-shaped lever 34, where the flat spring 33 is fixed onto an external surface of a sidewall 11a of a groove 11 in a receiver portion 9, while the lever 34 is rotatably attached to the flat spring 33 with a mid portion of the lever 34 being a rotation axis. In this case, the lever 34 is normally urged by the flat spring 33 such that a first end of the lever 34 is located within the groove 11, namely, takes the advanced position.

With the above configuration, when the cam portions 26 are moved along the grooves 11 in the receiver portions 9 for fitting the cutter holder 10 to the device main body 1, a cam portion 26 drives the first end of the stopper 12C out of the groove 11. Thus, the lever 34 is rotated about the mid portion, such that a second end of the lever 34 takes a position that is within the groove 11 and at the back of the cam portion 26. When the cam portions 26 are reversely moved along the grooves 11 in the receiver portions 9 in this state for detaching the cutter holder 10 from the device main body 1, a cam portion 26 drives the second end of the lever 34 out of the groove 11. Thus, the lever 34 is rotated about the mid portion, allowing the first end of the lever 34 to take a position that is within the groove 11 and in the front of the cam portion 26. In other words, with the above configuration, rotation of the lever 34 is ensured in attaching/detaching the cutter holder 10 to/from the device main body 1; thus, it is obviated, for example, that juice or other stuff adheres to the lever 34 so that the lever 34 ceases to function as a stopper.

Moreover, with the above configuration, a stiff material can be used for the lever 34, which provides for a secure stop function, i.e., a safety function.

Further, in the foregoing description, the stopper 12 is configured to be moved between the advanced position within a groove 11 and the receded position outside the groove 11. The present invention is however not limited thereto. The stopper 12 is provided for permitting or hindering the movement of the longitudinally movable member 23; therefore, the longitudinally movable member 23 may adopt any configuration insofar as the longitudinally movable member 23 is movable between an advanced position within the movement path of the longitudinally movable member 23 and a receded position outside the movement path of the longitudinally movable member 23.

### «Second Embodiment»

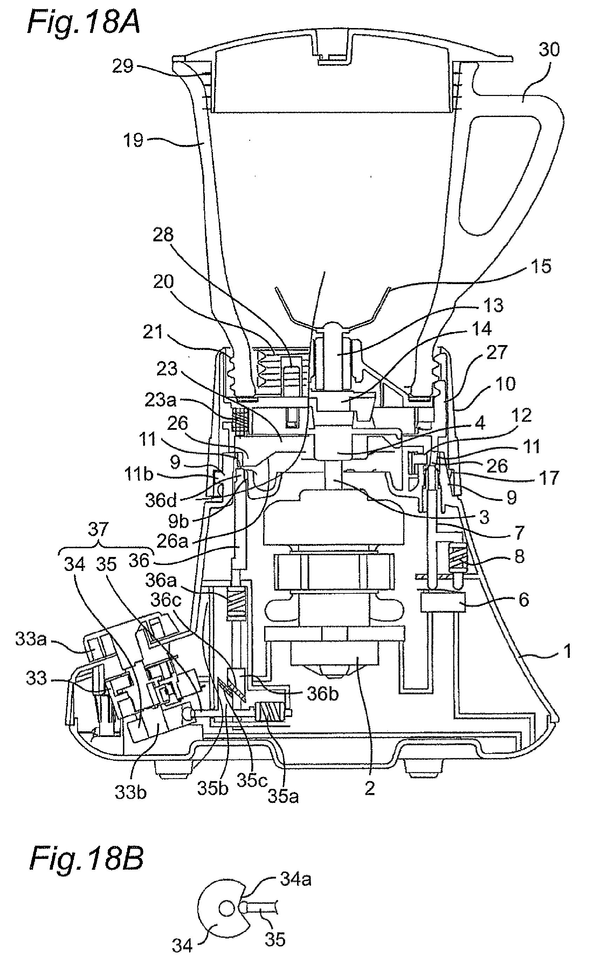

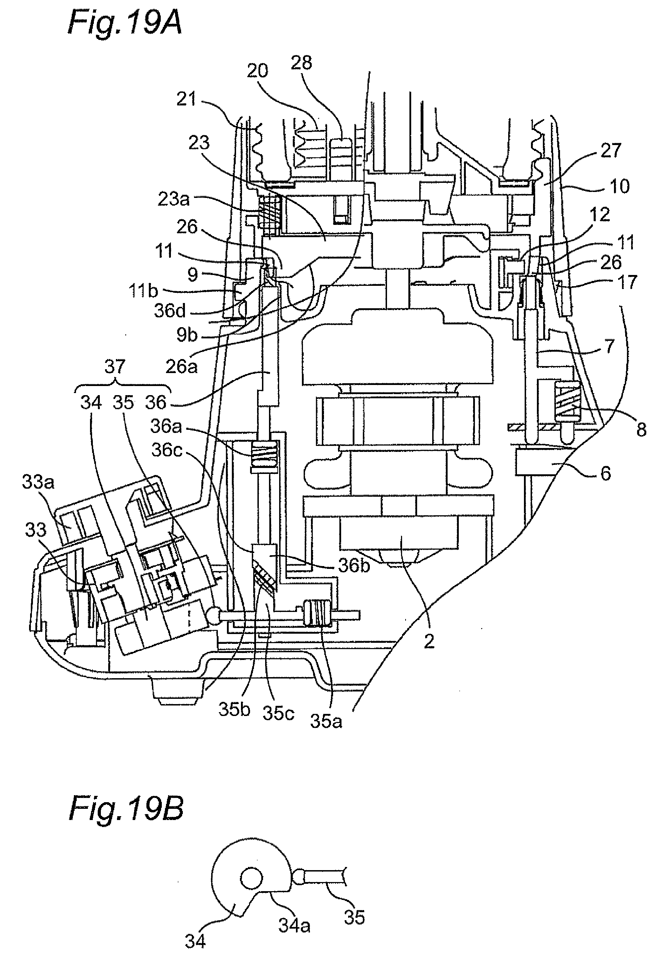

Description is given of a rotary cooking device according to a second embodiment of the present invention with reference to Figs. 18A to 19B. The rotary cooking device of the second embodiment is different from the rotary cooking device of the first embodiment in that the operating portion 5 is provided in the form of a rotary switch 33 and that, in the state where the rotary switch 33 is "on", the cutter holder 10 is prevented from either being attached or detached. Fig. 18A is a conceptual diagram of the overall configuration of the rotary cooking device according to the second embodiment of the present invention in a state where the rotary switch 33 is "ON". Fig. 18B is a plan view depicting a positional relationship between a cam 34 and a first rod 35 in the rotary cooking device of Fig. 18A. Fig. 19A is a conceptual diagram of the overall configuration of the rotary cooking device according to the second embodiment of the present invention in a state where the rotary switch 33 is "OFF". Fig. 19B is a plan view depicting a positional relationship between the cam 34 and the first rod 35 in the rotary cooking device of Fig. 19A.

In Figs. 18A and 18B, the rotary cooking device according to the second embodiment includes a rotary switch 33 with a rotary knob 33a. Rotating the rotary knob 33a allows for at least switching between drive start (ON) and drive stop (OFF) of the motor 2.

The cam 34 fixedly surrounds a rotating shaft 33b of the rotary switch 33. As depicted in Figs. 18B and 19B, the cam 34 is a substantially circular member partly provided with a recess 34a in the outer periphery thereof. A first rod 35 comes into contact with the outer periphery of the cam 34. The first rod 35 is urged against the outer periphery of the cam 34 by a spring 35a, which is an exemplary elastic member, such that the cam 34 and the first rod 35 are kept in contact on each other. When the cam 34 is rotated by rotating motion of the rotary switch 33, the first rod 35 is moved in a lateral direction, which is an exemplary first axial direction, because of the recess 34a being provided in the cam 34.

A branching portion 35b that projects upward is provided at the middle of the first rod 35. The branching portion 35b has at its upper end a slant surface 35c that slants crossing the longitudinal and lateral directions.

A second rod 36 is provided in a longitudinally movable manner at an upper portion of the branching portion 35b. The second rod 36 has a structure in which two rods are coupled to each other at their respective ends by means of a spring 36a, which is an exemplary elastic member. A slant surface 36c is provided at the lower end 36b of the second rod 36. The slant surface 36c slants to follow the slant surface 35c of the first rod 35. The second rod 36 slides at its slant surface 36c along the slant surface 35c of the first rod 35, causing the second rod 36 to be moved in the longitudinal direction, which is an exemplary second axial direction. More specifically, when the rotary switch 33 is switched from an "OFF" state to an "ON" state, as depicted in Fig. 18A, the second rod 36 ascends. When the rotary switch 33 is switched from the "ON" state to the "OFF" state, as depicted in Fig. 19A, the second rod 36 descends.

The upper end 36d of the second rod 36 is configured to pass through a through hole 9b provided in a receiver portion 9. The upper end 36d of the second rod 36 advances into a groove 11 in a receiver portion 9 as the second rod 36 ascends, and recedes out of the groove 11 in the receiver portion 9 as the second rod 36 descends. In other words, the upper end 36d of the second rod 36 advances into the groove 11 in the receiver portion 9 when the rotary switch 33 is turned on and recedes out of the groove 11 in the receiver portion 9 when the rotary switch 33 is turned off. The upper end 36d of the second rod 36 is configured such that, when the rotary switch 33 is turned on with the cutter holder 10 having the container 19 screwed thereto being mounted on the device main body 1, the upper end 36d advances into a groove 11 in a receiver portion 9 to be located in between adjacent cam portions 26.

As described earlier, the cutter holder 10 is attached to the device main body 1 by means of bayonet coupling. Insodoing, the cutter holder 10 needs tobe rotated (alsoreferred to as turning motion). However, with the upper end 36d of the second rod 36 advanced to a position in a groove 11 in a receiver portion 9, the cutter holder 10 is kept from being turned, and thus the cutter holder 10 is not attached to the device main body 1. Meanwhile, when the rotary switch 33 is turned on with the cutter holder 10 having the container 19 screwed thereto being mounted on the device main body 1, the upper end 36d of the second rod 36 advances into a groove 11 in a receiver portion 9 so as to be located in between adjacent cam portions 26. If an attempt is made to turn the cutter holder 10 in this state, the upper end 36d of the second rod 36 comes into contact with a cam portion 26 to stop the cutter holder 10 from being turned. Thus, the cutter holder 10 is not detachable from the device main body 1.

Specifically, according to the above configuration, attachment and detachment of the cutter holder 10 is prevented when the rotary switch 33 is "ON". Meanwhile, since turning motion of the cutter holder 10 is permitted when the upper end 36d of the second rod 36 is receded out of a groove 11 in a receiver portion 9, attachment and detachment of the cutter holder 10 is permitted.

In the second embodiment, the cam 34, the first rod 35, and the second rod 36 constitute a cutter holder attachment/detachment preventing portion 37 for hindering attachment/detachment of the cutter holder 10. Further, the position at which the upper end 36d of the second rod 36 reaches by advancing into a groove 11 in a receiver portion 9 is referred to as an attachment/detachment preventing position (the position indicated in Fig. 19A). The position at which the upper end 36d of the second rod 36 reaches by receding out of a groove 11 in a receiver portion 9 is referred to as an attachment/detachment permitting position (the position indicated in Fig. 18A.)

In this embodiment, the cutter holder attachment/detachment preventing portion 37 is configured such that the second rod 36 is movable between the attachment/detachment preventing position within the groove 11 and the attachment/detachment permitting position outside the groove 11. The present invention is however not limited thereto. Since the cutter holder attachment/detachment preventing portion 37 is a member for permitting or preventing attachment/detachment of the cutter holder 10, any configuration is possible insofar as the cutter holder attachment/detachment preventing portion 37 is movable between an attachment/detachment preventing position within the movement path of the cutter holder 10 and an attachment/detachment permitting position outside the movement path of the longitudinally movable member 23.

Description is given next of functions and effects of the rotary cooking device of the second embodiment having the above configuration.

Generally, the rotary switch 33 stays "ON" or "OFF" unless the rotary knob 33a is turned. For this reason, for example, the rotary switch 33 is "on" in some cases in a state where the cutter holder 10 and the container 19 are detached from the device main body 1. If the cutter holder 10 is mounted onto the device main body 1 in this state, the cutter 15 may be inadvertently rotated. More specifically, if the cutter holder 10 is mounted onto the device main body 1 with the longitudinally movable member 23 lowered by, for example, manual depression of the longitudinally movable member 23, the longitudinally movable pin 7 will be pressed down by the longitudinally movable member 23 at the lower position to turn on the safety switch 6, prompting rotation of the cutter 15.

Meanwhile, if the rotary switch 33 is turned on with the cutter holder 10 having the container 19 screwed thereto mounted on the device main body 1, the driving force of the motor 2 is transmitted to the rotating shaft 13 of the cutter 15 through the driving side connector 4 and the driven side connector 14, prompting rotation of the cutter 15. If the cutter holder 10 with the container 19 screwed thereto is detached from the device main body 1 in this state without turning off the rotary switch 33, the rotation of the cutter 15 will have not stopped immediately after the detachment, which might lead to abrasion or damage on the driving side connector 4 and the driven side connector 14.

On the other hand, in the second embodiment, either attachment or detachment of the cutter holder 10 is prevented when the rotary switch 33 in "on". The above-noted situation is thus obviated. Hence, higher safety is endured.

In the foregoing description, attachment/detachment of the container 19 is prevented mechanically in conj unction with the turning motion of the rotary switch 33, i.e., switching of ON/OFF states. The present invention is however not limited thereto. For example, a press button switch may be adopted instead of the rotary switch 33, so that attachment/detachment of the cutter holder 10 is prevented mechanically in conjunction with depression of the switch.

It is noted that any of the various embodiments described above may be appropriately combined to provide the respective effects thereof.

### INDUSTRIAL APPLICABILITY

Higher safety being ensured with prevention of inadvertent rotation of the cutter that is exposed to the outside, rotary cooking devices according to the present invention are usefully applied to various rotary cooking devices such as blenders and mills.

Although the present invention has been fully described in connection with the preferred embodiments thereof with reference to the accompanying drawings, it is noted that various changes and modifications are apparent to those skilled in the art. Such changes and modifications are to be understood as included within the scope of the present invention as defined by the appended claims unless they depart therefrom.

The entire disclosure of Japanese Patent ApplicationNo. 2009-222230 filed on September 28, 2009 including specification, drawings, and claims are incorporated herein by reference in its entirety.

## Claims

1. A rotary cooking device comprising:
a device main body including a motor;
a cutter holder rotatably supporting a cutter, the cutter holder being detachably attached to the device main body; and
a container detachably attached to the cutter holder so that the cutter is located therein, the container defining a space for containing a cooking ingredient, wherein
the cutter holder is attached to the device main body, thereby coupling an output shaft of the motor to a rotating shaft of the cutter such that the cutter becomes rotatable,
the rotary cooking device further comprises:
a longitudinally movable member disposed in the cutter holder; and
a stopper having at least a portion, the portion being movable between an advanced position located in a movement path of the longitudinally movable member and a receded position outside the movement path of the longitudinally movable member, wherein
the rotary cooking device is adapted such that
in a state where the container is attached to the cutter holder attached to the device main body, the portion of the stopper is at the receded position and the longitudinally movable member is at a lower position for causing the motor to be drivable, and
in a state where the container is not attached to the cutter holder, the cutter holder being attached to the device main body, the longitudinally movable member is at an upper position to prevent the motor from being drivable and the portion of the stopper is at the advanced position to stop the longitudinally movable member from moving to the lower position.

2. The rotary cooking device according to claim 1, wherein
the stopper has an elastic portion, and the stopper is at the advanced position in a state of non-deformation of the elastic portion.

3. The rotary cooking device according to claim 2, wherein
the cutter holder is detachably attached to the device main body by an operation including turning motion, and
the longitudinally movable member is movable to the upper position in conjunction with the turning motion, and the elastic portion is elastically deformable in conjunction with the movement of the longitudinally movable member and the stopper is movable from the advanced position to the receded position.

4. The rotary cooking device according to claim 3, wherein
the cutter holder is detachable from the device main body by an operation including turning motion reverse to the turning motion, and
the longitudinally movable member is movable to the lower position in conjunction with the reverse turning motion, and the elastic portion is elastically restorable in conjunction to the movement of the longitudinally movable member and the stopper is movable from the receded position to the advanced position.

5. The rotary cooking device according to claim 3 or 4, wherein the cutter holder is detachably attached to the device main body through bayonet coupling.

6. The rotary cooking device according to claim 1 or 2, wherein
the cutter holder has threaded portions at spacings in a peripheral direction along a tubular sidewall of the cutter holder, the threaded portions each having a plurality of screw threads along a longitudinal direction to screwably receive the container,
the longitudinally movable member includes a lever projecting upward, the lever having screw threads along the longitudinal direction, the screw threads being placeable in continuity with the threaded portions of the cutter holder, and
for screwing the container to the cutter holder, the container comes into contact with the lever to lower the longitudinally movable member.

7. The rotary cooking device according to claim 6, wherein, in a state where the longitudinally movable member is at the upper position, ridges of the threaded portions of the cutter holder and ridges of the screw threads on the lever is at an equal height.

8. The rotary cooking device according to claim 2, wherein the stopper includes a flat spring partly having a bend.

9. The rotary cooking device according to claim 2, wherein
the device main body includes a receiver portion for allowing the longitudinally movable member to be received therein, and
the receiver portion and the stopper are an integrally molded member of a synthetic resin.

10. The rotary cooking device according to claim 2, wherein
the device main body includes a receiver portion for allowing the longitudinally movable member to be received therein, and
the stopper includes a pin movably passable through a sidewall of the receiver portion, the stopper being configured such that one end of the pin is located at the advanced position in a state of non-deformation of the elastic portion.

11. The rotary cooking device according to claim 2, wherein the stopper includes a rotatable lever having a mid portion as a rotation center thereof, the stopper being configured such that a first end of the lever is located at the advanced position in a state of non-deformation of the elastic portion, and that a second end of the lever is located at the advanced position in a state of elastic deformation of the elastic portion.

12. The rotary cooking device according to claim 1 or 2, including:
an operating portion for allowing input of information at least indicating drive start or drive stop of the motor; and
a cutter holder attachment/detachment preventing portion for permitting attachment and detachment of the cutter holder in response to input of information indicating drive stop of the motor through the operating portion, and for preventing attachment and detachment of the cutter holder in response to input of information indicating drive start of the motor through the operating portion.

13. The rotary cooking device according to claim 12, wherein
the operating portion is a rotary switch, and
the cutter holder attachment/detachment preventing portion is movable between an attachment/detachment permitting position for permitting attachment and detachment of the cutter holder and an attachment/detachment preventing position to prevent attachment and detachment of the cutter holder, mechanically in conjunction with rotating motion of the rotary switch.

14. The rotary cooking device according to claim 13, wherein
the cutter holder is detachably attached to the device main body by an operation including turning motion, and
the cutter holder attachment/detachment preventing portion is movable between the attachment/detachment preventing position to prevent the turning motion of the cutter holder and the attachment/detachment permitting position for permitting the turning motion of the cutter holder, the cutter holder attachment/detachment preventing portion being located at the attachment/detachment preventing position by moving into a movement path of the cutter holder and at the attachment/detachment permitting position by moving out of the movement path of the cutter holder, mechanically in conjunction with rotating motion of the rotary switch.

15. The rotary cooking device according to claim 14, wherein
the cutter holder attachment/detachment preventing portion includes:
a substantially circular cam fixed around a rotating shaft of the rotary switch, the cam having a recess at a portion of an outer periphery thereof;
a first rod disposed to come into contact with the outer periphery of the cam, the first rod being movable in a first axial direction by rotation of the cam to be caused by rotating motion of the rotary switch; and
a second rod disposed to come into contact with the first rod, the second rod being movable between the attachment/detachment preventing position and the attachment/detachment permitting position by movement in a second axial direction in conjunction with the movement of the first rod in the first axial direction.
